# FASCICULE DE BREVET EUROPEEN

(11) **EP 0 679 233 B1**
(45) Date de publication et mention de la délivrance du brevet: **07.01.1998**
(21) Numéro de dépôt: 95901491.1
(22) Date de dépôt: 15.11.1994
(51) Int. Cl.: F16F 15/12, F16C 33/20

(54) **VOLANT AMORTISSEUR NOTAMMENT POUR VEHICULE AUTOMOBILE**
DÄMPFENDES SCHWUNGRAD, INSBESONDERE FÜR KRAFTFAHRZEUGE
FLYWHEEL, IN PARTICULAR FOR MOTOR VEHICLES

(30) Priorité: 15.11.1993 FR 9313581
(43) Date de publication de la demande: 02.11.1995
(73) Titulaire: VALEO, 75017 Paris (FR)
(72) Inventeur: DUCLOS, Didier, F-77330 Ozoir-la-Ferrière (FR)
(74) Mandataire: Gamonal, Didier
(86) Numéro de dépôt international: FR9401332
(87) Numéro de publication internationale: WO9514180

(56) Documents cités:
- EP-A- 0 509 875
- GB-A- 2 168 784
- US-A- 5 111 714
- US-A- 5 229 198
- PATENT ABSTRACTS OF JAPAN vol. 14, no. 417 (C-0756) 10 Septembre 1990 & JP,A,02 158 690 (RICOH CO LTD) 19 Juin 1990

## Description

La présente invention concerne les volants amortisseurs, notamment pour véhicule automobile, du genre comportant globalement deux masses coaxiales montées rotatives l'une par rapport à l'autre à l'encontre d'un dispositif amortisseur de torsion comportant un dispositif de frottement, l'une des masses comportant un nez de centrage saillant axialement et pénétrant dans un évidement central de l'autre masse, avec intervention de moyens de support entre ledit nez et ledit évidement pour montage rotatif de la masse à évidement central.

Un tel volant amortisseur est décrit dans le document US-A-4,782,933.

Usuellement les moyens de support consistent en un roulement à billes, ce qui augmente le prix de revient du volant amortisseur.

En outre, ce roulement est le plus souvent lubrifié en sorte que la graisse qu'il contient peut s'échappper et venir ainsi souiller le plateau de réaction et/ou le dispositif de frottement, en sorte que les performances et la durée de vie du volant amortisseur sont réduites.

De plus le roulement peut se gripper. Dans ce document US-4,782,993, ce roulement est associé au dispositif de frottement précité.

Plus précisément le dispositif de frottement est porté par le nez de centrage et est interposé axialement entre la bague interne du roulement et un flasque d'une première masse.

Ce dispositif de frottement comporte, de manière connue en soi, une rondelle élastique à action axiale prenant appui sur une rondelle d'application calée en rotation sur le nez de centrage et sur un épaulement porté par le nez central pour venir serrer une rondelle de frottement, portant sur chacune de ses faces des garnitures de frottement, et induire un frottement.

Cette rondelle de frottement engrène avec des colonnettes solidaires de la seconde masse.

Ainsi la rondelle de frottement est admise à frotter contre le flasque et la rondelle d'application lors du fonctionnement du volant amortisseur.

Ces colonnettes permettent de solidariser un voile appartenant au dispositif amortisseur de torsion à un plateau de la seconde masse, en sorte que celles-ci sont sollicitées par le dispositif de frottement. Il en résulte également que l'agencement roulement-dispositif de frottement est encombrant axialement.

La présente invention a pour objet de pallier ces inconvénients, de manière simple et économique, et donc de créer un nouveau volant amortisseur dépourvu de roulement à billes, tout en étant plus compact au niveau de son nez de centrage.

Suivant l'invention un volant amortisseur du type sus-indiqué, dans lequel le dispositif amortisseur de torsion comporte un voile, est caractérisé en ce que le dispositif de frottement est monté en majeure partie dans une cavité délimitée par un plateau de la seconde masse et le voile, et en ce que les moyens de support sont du type à palier lisse et interviennent entre le nez central et les alésages centraux dudit plateau et dudit voile.

Grâce à l'invention on diminue le prix de revient du volant amortisseur et on diminue l'encombrement axial de celui-ci au niveau de son nez de centrage.

En outre, du fait de la suppression économique du roulement, on peut loger le dispositif de frottement dans la cavité selon l'invention.

On appréciera également que l'on augmente la longueur du voile et du plateau, puisqu'en pratique les moyens de support sont moins encombrants radialement, ce qui permet mieux évacuer les calories et donc de ménager le palier lisse en deux parties selon l'invention.

En outre la seconde masse est montée tourillonnante sur la première masse de manière équilibrée puisque le plateau et le voile sont supportés.

De plus la fabrication du volant amortisseur est simplifiée, puisqu'il est possible d'intégrer le dispositif de frottement à la seconde masse.

En outre, on peut rôder par avance le dispositif de frottement, qui après montage est bien protégé et est à l'abri de toutes souillures.

De préférence le nez de centrage est rapporté sur la première masse, ce qui permet de rapporter par avance sur celui-ci les moyens de support à palier lisse selon l'invention.

Suivant une caractéristique de l'invention un volant amortisseur du type sus-indiqué est caractérisé en ce que les moyens de support comportent un revêtement de carbone diamant amorphe, pour montage rotatif de la masse à évidement central sur la masse à nez central.

Un tel revêtement est appelé aussi dans la littérature "pseudo carbone diamant", ce revêtement étant approximativement amorphe et contenant du carbone avec une faible proportion d'hydrogène.

Pour plus de précision, on se reportera aux documents FR-A-2 675 517 et EP-A-0395 198, décrivant un procédé avec introduction, à l'aide de vannes, d'un gaz carboné dans une chambre dans laquelle on a fait le vide auparavant à l'aide d'une pompe.

Après cette introduction on effectue une décharge électrique à l'aide d'un générateur haute fréquence entraînant une ionisation du gaz carboné, en sorte que les atomes perdent partiellement leurs électrons avec formation d'un plasma. Le support métallique, contenu dans la chambre précitée et servant de support à la pièce à revêtir (le nez central et/ou le voile par exemple), se charge alors négativement avec attraction des ions positifs présents dans le plasma, ce qui donne naissance au revêtement en carbone diamant amorphe.

Grâce à cette disposition, le revêtement confère des propriétés exceptionnelles, au volant amortisseur, proches de celles du diamant synthétique.

Ainsi, le volant présente des moyens de support, qui résistent bien à l'abrasion, ont un coefficient de frottement faible, en pratique inférieur à celui à revêtement en polytétrafluoréthylène vendu par exemple sous la marque "Téflon" ou en MoS2 (bisulfure de molybdène), une conductibilité thermique supérieure à celle du cuivre et résistent bien à la corrosion.

En outre, ce revêtement est stable pour les températures que peut atteindre le volant amortisseur.

De plus, son épaisseur est très faible, de l'ordre de 2 à 3 microns en sorte qu'il a peu d'incidence sur les cotes des pièces traitées.

Cette faible épaisseur permet de rallonger encore le plateau précité en sorte que les calories sont mieux évacuées.

D'une manière générale ce revêtement est économique et permet de diminuer notablement le prix de revient du volant amortisseur, tout en augmentant la durée de vie de celui-ci et sa fiabilité. Aucun souillage du plateau de réaction et/ou du dispositif de frottement n'est à craindre du fait que le revêtement est du type sec.

Bien entendu, comme décrit dans le document FR-A-2 675 517, ce revêtement peut être obtenu par condensation de vapeur par voie chimique assisté plasma comme précité, à partir de gaz carbonés, par exemple contenant un ou plusieurs hydrocarbures tel que du méthane, de l'acétylène, du propane ou du butane, auxquels on ajoute des composés siliciés et/ou des composés azotés-borés, le silicium apportant de la souplesse et de l'adhérence tandis que l'azote et le bord amènent de la stabilité thermique avec une augmentation de dureté.

On appréciera que ce revêtement adhère parfaitement à la pièce concernée et qu'il ne s'écaille pratiquement pas.

En outre, ce revêtement est un excellent isolant électrique.

En variante on peut utiliser comme palier lisse un polyetheretherketon vendu sous la marque "ARLON". Ce palier, consistant en un matériau thermoplastique dur semi-cristallin, résiste aux fortes températures et permet son utilisation à des températures supérieures à 260°, en sorte qu'il est bien adapté pour le volant amortisseur dont la température peut atteindre des valeurs de 200° au niveau du nez de centrage.

De plus ce matériau résiste bien à l'abrasion et accepte des charges élevées. Avantageusement ce matériau est renforcé par des fibres telles que des fibres de verre ou des fibres de carbone.

Avantageusement on adjoint des charges lubrifiantes à ce matériau.

En variante on peut utiliser comme palier lisse un copolymère d'éthylène et de tretrafluoréthylène tel que du "Téflon".

La description qui va suivre illustre l'invention en regard des dessins annexés dans lesquels :
- la figure 1 est une demi-vue en coupe axiale d'un volant amortisseur selon l'invention ;
- la figure 2 est une vue partielle selon la flèche 2 de la figure 1, la deuxième masse ayant été enlevée ainsi que la pièce en tôle masquant les ressorts ;
- la figure 3 est une vue partielle en coupe axiale montrant une vis de fixation du voile au plateau de réaction de la seconde masse ;
- la figure 4 est une vue partielle montrant, à plus grande échelle, le dispositif de frottement de la figure 1 ;
- la figure 5 est une vue analogue à la figure 1 pour un autre exemple de réalisation ;
- la figure 6 est une vue analogue à la figure 4 pour encore un autre exemple de réalisation.

Dans les figures est illustré un volant amortisseur, dit communément double volant amortisseur, pour véhicule automobile du genre comportant globalement deux masses 1, 2 coaxiales montées rotatives l'une par rapport à l'autre à l'encontre d'un dispositif amortisseur de torsion 3, l'une des masses comportant un nez central 4 saillant axialement et pénétrant dans un évidement (ou alésage) central 5 de l'autre masse, avec intervention de moyens de support 6 entre ledit nez 4 et ledit évidement 5 pour montage rotatif de la masse à évidement central 5.

Ainsi qu'on le sait ce volant amortisseur permet de filtrer les vibrations qui prennent naissance tout au long de la chaîne cinématique sur un véhicule automobile, va du moteur à combustion interne aux arbres de roues.

Plus précisément ici la première masse 1, ou masse d'entrée est destinée à être calée en rotation sur le vilebrequin 7 du moteur, tandis que la deuxième masse 2, ou masse de sortie est destinée à être calée en rotation sur l'arbre d'entrée de la boîte de vitesses.

La première masse 1 reçoit donc le couple du moteur, tandis que la deuxième masse 2 transmet le couple de l'arbre d'entrée de la boîte de vitesses.

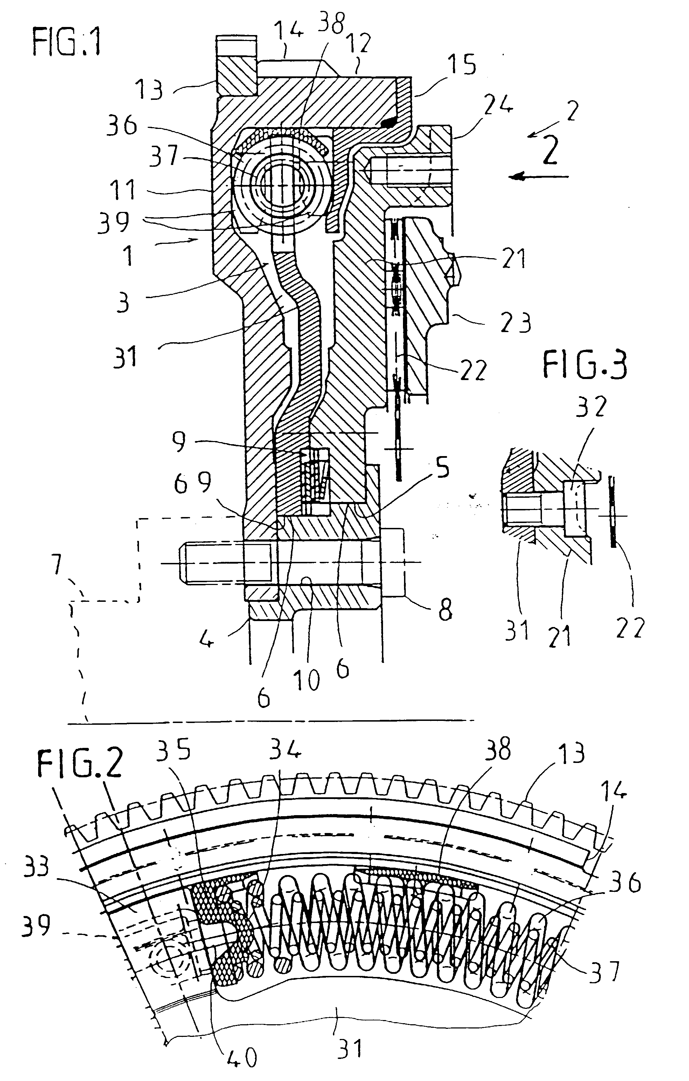

Ici (figure 1) c'est la première masse 1 qui comporte le nez central 4, tandis que la seconde masse 2 présente l'évidement central 5.

La masse 1 est solidarisée au vilebrequin 7 par une pluralité de vis 8 traversant chacune des trous 10 pratiqués en coincidence respectivement dans le nez 4 et dans un flasque transversal 11. Ce nez 4 centre le flasque 11 et les vis 8 assemblent le flasque 11 et le nez 4.

Le flasque 11 porte à sa périphérie externe une couronne entretoise 12 d'orientation axiale, ici d'un seul tenant avec le flasque 11. En variante la couronne 12 est rapportée, par exemple par rivetage ou roulage, sur le flasque 11.

La couronne 12 porte une couronne de démarrage 13 propre à être entraînée par le démarreur du véhicule, ainsi que des cibles d'allumage 14 sous forme de creux (figure 2) ou de bosses (non représentées).

Une pièce en tôle 15 de forme tortueuse épouse la forme de la couronne 12 en étant implantée à l'extrémité libre de celle-ci. La pièce 15 est fixée par soudage à la couronne 12 et présente à sa périphérie interne une partie en forme de flasque transversal dirigé vers l'axe de l'ensemble.

La seconde masse 2 comporte une plateau 21 formant le plateau de réaction d'un embrayage classique, dont on voit partiellement en 22 le disque de friction, doté de garnitures de frottement, et en 23 le plateau de pression. C'est sur le rebord périphérique 24 du plateau 21 que l'on vient fixer le couvercle de l'embrayage (non visible) avec intervention d'un diaphragme (non visible) entre le couvercle et le plateau de pression.

Pour plus de précision on se reportera par exemple à la figure 1 du document US-A-4,782,933 sachant que normalement l'embrayage est engagé, le disque 22 étant serré, sous l'action du diaphragme, entre les plateaux 21, 23.

Le disque 22 présentant à sa périphérie interne un moyeu (non visible) calé en rotation sur l'arbre d'entrée de la boîte de vitesses, la seconde masse est ainsi calée en rotation sur ledit arbre d'entrée par l'intermédiaire de l'embrayage.

Le plateau 21 présente à sa périphérie interne un alésage constituant l'évidement central 5 précité.

Un voile 31 est rapporté à l'aide de vis 32 (figure 3) sur le plateau de réaction 21, à la périphérie interne de celui-ci radialement en deça des garnitures de frottement du disque 21.

Le voile 31 présente à sa périphérie interne un évidement ou alésage central 69 et à sa périphérie externe en saillie une pluralité de bras 33 radiaux, dont l'un est visible à la figure 2.

Ce voile 31 est destiné à venir en contact avec le plateau de réaction 21 à sa périphérie interne de manière décrite ci-après.

Chaque bras 33 présente circonférentiellement des doigts 40 pénétrant chacun dans une creusure d'une coupelle d'appui 35 (figure 2). Des ressorts à boudins concentriques 36, 37 interviennent entre deux bras consécutifs 33, avec interposition des coupelles 35 entre les extrémités circonférentielles des ressorts 36, 37 et les bras 33.

La coupelle 35 est conformée pour retenir extérieurement le ressort externe 36 et présente centralement une protubérance 34, délimitant la creuse précitée, pour centrage du ressort interne 37.

Les bras 33 pénètrent dans la cavité délimitée par la pièce 15, la couronne 12 et le flasque 11.

Le flasque 11 et la pièce 15 portent à rivetage des blocs 39 en regard des bras 33, pour appui des ressorts 36, 37 à action circonférentielle via les coupelles 35. Ainsi les ressorts 36, 37 peuvent être graissés, de la graisse étant prévue dans la cavité précitée.

Bien entendu au lieu de blocs, la pièce 15 et le flasque 11 peuvent présenter des emboutis pour l'appui des ressorts 36, 37. On notera que les ressorts externes 36 portent des patins 38, montés sur une spire du ressort 36, lesdits patins venant frotter contre la périphérie interne de la couronne 12. Ces ressorts 36,37 s'opposent à la rotation des masses 1,2 l'une par rapport à l'autre.

Les pièces 31,33,35,36,37,38,39 appartiennent au dispositif amortisseur de torsion 3, précité, mécaniquement interposé entre les deux masses. Ainsi, de manière connue en soi, lors du débattement angulaire relatif entre les deux masses 1, 2 les ressorts 36, 37 sont comprimés. Le dispositif amortisseur de torsion 3 comporte également un dispositif de frottement 9 implanté à la périphérie externe du nez 4, ici de forme tubulaire et métallique.

Le plateau de réaction 21, usuellement en fonte, s'échauffe. En effet à chaque engagement de l'embrayage les garnitures de frottement du disque 21 viennent frotter sur le plateau 21, qui peut atteindre ainsi des températures, de l'ordre de 200° au niveau des moyens de support 6.

A cet effet, et pour supprimer le roulement à billes intervenant usuellement entre les deux masses du volant amortisseur afin d'abaisser le coût du volant amortisseur, tout en diminuant l'encombrement axial du volant amortisseur au niveau de son nez de centrage 4, l'invention propose de monter le dispositif de frottement 9 en majeure partie dans une cavité délimitée par le plateau de réaction 21 de la seconde masse 2 et le voile 31.

L'invention propose d'utiliser comme moyen de support un palier lisse, ledit palier lisse intervenant entre le nez central 4 et ledit plateau 21 et ledit voile 31.

Plus précisément ce palier lisse 6 intervient entre la périphérie externe du nez de centrage 4 et les alésages ou évidements centraux 69,5 du voile 31 et du plateau 21. Il intervient de part et d'autre de la cavité 50.

A la figure 1 les moyens de support sont caractérisés en ce qu'ils comportent un revêtement de carbone diamant amorphe pour montage rotatif du voile 31 et du plateau de réaction 21 sur la masse à nez central 4.

Ce revêtement en forme de couche est d'une mise en oeuvre aisée.

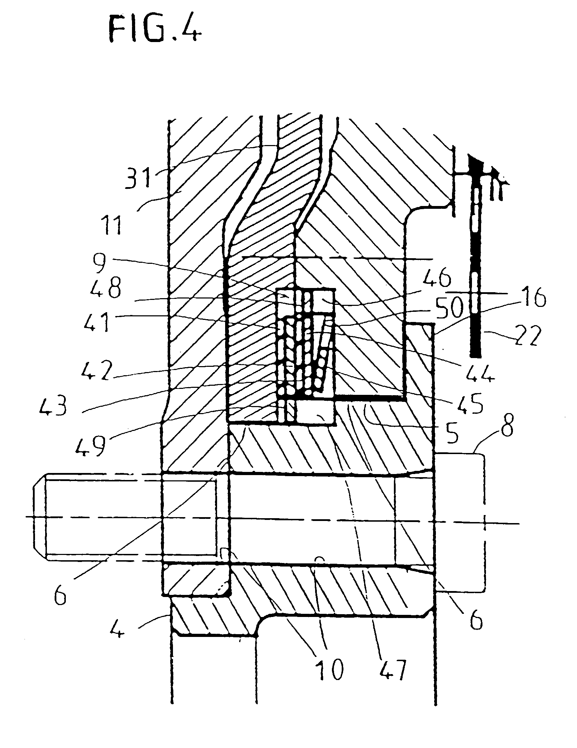

Plus précisément le dispositif de frottement 9 est monté dans une cavité 50 formée à la faveur de creusures pratiquées en regard l'une de l'autre respectivement dans le voile 31 et dans le plateau de réaction 21 (figure 4).

Ce dispositif comporte successivement axialement en allant du voile 31 au plateau 21, une rondelle de frottement 41, une rondelle de transmission de mouvement 42, une rondelle de frottement 43, une rondelle 44 et une rondelle élastique à action axiale 45, ici du type rondelle Belleville.

Les rondelles de frottement 41,43 peuvent être solidaires de la rondelle 42 par exemple par collage. En variante la rondelle 41 peut être collée sur le voile 31 et la rondelle 43 sur la rondelle 44.

Ces rondelles 41,43 peuvent être montées libres. Tout cela dépendant des applications et des frottements recherchés. Ici la rondelle 44 constitue une rondelle d'application pour la rondelle élastique 45.

La rondelle 42 présente à sa périphérie interne une pluralité de dents 49, tandis que la rondelle 44 présente à sa périphérie externe une pluralité de dents 48. Les dents 49 et 48 pénètrent dans des rainures 47 et 46 pratiquées respectivement à la périphérie externe du nez 4 et dans le plateau 21 à la périphérie externe de la cavité 50.

Il y a ainsi création de liaison par coopération de formes, ici du type tenons-mortaises.

Ces dents 49 et 48 engrènent ici sans jeu avec leur rainure associée 47,46.

En variante l'une au moins desdites dents 49,48 peuvent engrèner à jeu avec sa rainure associée 47,46.

Tout cela dépend des applications, le dispositif de frottement pouvant intervenir en permanence ou par exemple lors du démarrage du moteur ou de son arrêt.

Pour mémoire on rappellera qu'en fonctionnement la seconde masse 2 est admise à se déplacer angulairement par rapport à la première masse 1, en sorte que la rondelle d'application 44 est entraînée en rotation par la seconde masse 2 et la rondelle 42 est entraînée en rotation par la première masse 1.

Ainsi un frottement apparaît ici entre la rondelle de frottement 41 et le voile 31 et entre la rondelle de frottement 43 et la rondelle d'application 44, le ressort 45, qui en variante peut être une rondelle ondulée élastique, étant monté entre deux parties liées en rotation l'une par rapport à l'autre, en sorte que les usures sont réduites.

Ici le nez 4 est épaulé à l'une de ses extrémités ici son extrémité libre (la plus éloignée du flasque 11) et présente à cet effet une collerette 16.

Ce nez 4 de forme cylindrique est étagé à sa périphérie externe et présente à la faveur de changements de diamètre, en allant du flasque 11 à la collerette 16, une première portion lisse, une deuxième portion comportant les rainures 47, de diamètre externe supérieur, et une troisième portion lisse délimitée par la collerette 16 et globalement de même diamètre que celui de la deuxième portion.

Ainsi qu'on l'aura compris, il est aisé de fabriquer les rainures 47.

De même les rainures 46 sont aisément réalisables en étant pratiquées dans la portion externe d'orientation axiale de la creusure du plateau 21 délimitant la cavité 50.

Le nez 4 est rapporté ici sur le flasque 11 par les vis 8, en sorte qu'il est aisé de former un sous-ensemble comportant le voile 31, le dispositif de frottement 9 monté dans sa cavité 50, et le plateau 21.

En effet, il suffit d'empiler les rondelles 45 et 44 dans la creusure du plateau 21, puis de monter les rondelles 41 à 43 et enfin le voile 31, qui vient alors en contact avec la périphérie interne du plateau de réaction 21 pour fermer la cavité, la fixation entre les pièces 31,21 étant réalisée à l'aide des vis 32 de la figure 3.

Il en résulte que les dents 49 font saillie radialement vers l'intérieur. Il suffit alors d'emmancher en final le nez 4 dans les alésages centraux du voile 31 et du plateau 21, les rainures 47 venant en prise avec les dents 49.

De préférence le revêtement de carbone diamant amorphe est réalisé à la périphérie externe du nez 4 et affecte également la face de la collerette 16 dirigée vers le flasque 11.

Plus précisément un dépôt d'une couche dure à base de carbone diamant amorphe est obtenu avantageusement par la technique ou procédé dit "CVD assisté plasma". Par cette technique on introduit un gaz carboné, contenant un ou plusieurs hydrocarbures, dans une chambre à vide renfermant un support métallique relié à un générateur haute fréquence et sur lequel se trouve la pièce métallique à revêtir et on entretient une décharge électrique à l'intérieur de la chambre de façon à élever la température de la pièce précitée à une valeur de l'ordre de 200° et dans des conditions de puissance et de pression permettant l'excitation physique et chimique du gaz et son ionisation de façon à provoquer le dépôt sur la pièce chargée alors négativement d'une couche dure de faible épaisseur (2 à 3 microns) à base de carbone diamant amorphe ou pseudo carbone diamant.

Avantageusement on ajoute au gaz carboné des composés siliciés, notamment du silane et/ou tétraméthylsilane et d'autre part des composés renfermant un atome de carbone de bord ou de fluorocarboné.

Ainsi l'azote et le bore amènent de la stabilité thermique ainsi que de la dureté et l'on obtient le dépôt d'une couche mince d'un matériau particulièrement dur et dense.

Bien sûr l'épaisseur de cette couche peut être supérieure à 2 ou 3 microns suivant les applications.

Ainsi qu'on l'aura compris, en traitant le nez 4, on diminue le coût unitaire de ce processus car il est possible de traiter simultanément plusieurs pièces.

On notera que l'on peut avantageusement également traiter de la même manière la face du flasque 11 tournée vers la collerette 16. En variante on peut traiter la face du voile 31 adjacente au flasque 11, ainsi que l'alésage central 39 du voile 31.

On appréciera que le revêtement affecte également les rainures 47, ce qui n'est pas gênant compte tenu de la faible épaisseur du dépôt.

Bien entendu le palier lisse peut être en matériau thermoplastique dur semi-cristallin tel que de "Arlon" précité. Il peut être également à base de "Téflon".

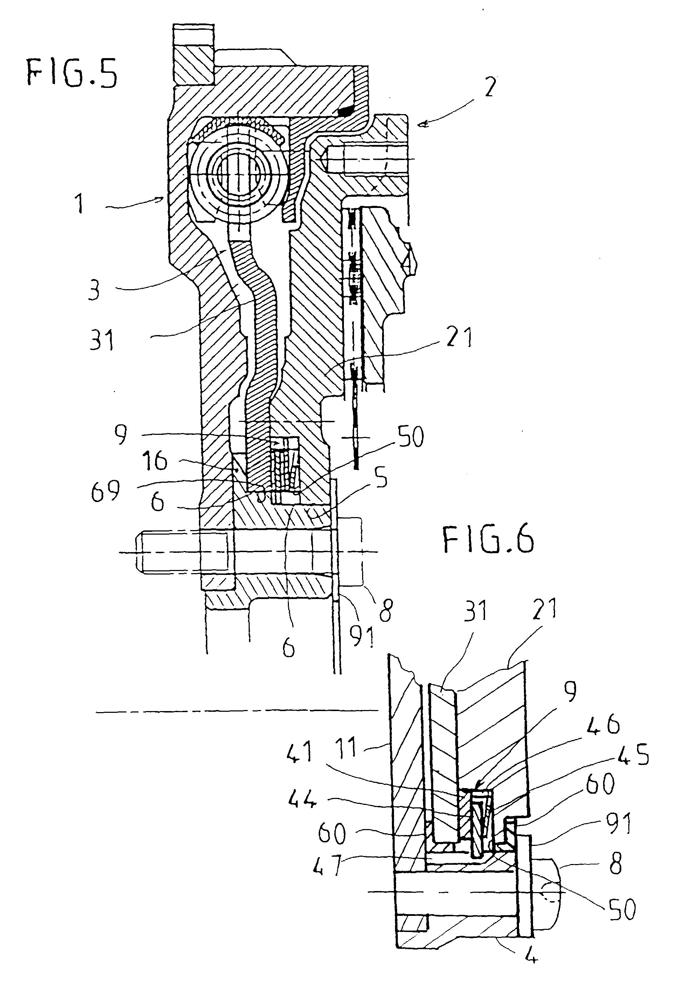

Dans ce cas, il faut prévoir deux demi-bagues 60 épaulées à section en forme d'un L inversé (figure 6).

On appréciera que la seconde masse est ainsi bien soutenue par le nez 4.

Toutes ces dispositions conduisent à rallonger vers l'axe de l'ensemble le voile 31 et le plateau 21 mais ceci n'est pas gênant car cela permet de mieux évacuer les calories et donc de mieux protéger le palier lisse en deux parties selon l'invention.

On appréciera que les vis 32 ne sont pas sollicitées outre mesure par le dispositif de frottement 9 qui ne risque pas d'être souillé car en final il est monté dans une cavité fermée délimitée par le nez 4 (les rainures 47), le plateau 21 et le voile 31. Ce dispositif est donc bien protégé.

En outre, vu l'absence de roulement lubrifié, on ne risque pas de souiller le plateau de pression 21. De même la graisse des ressorts 36 et 37 ne risque pas de perturber le fonctionnement du dispositif de frottement 9 selon l'invention.

Ici on notera que le voile 31 a une forme tortueuse avec une portion centrale décalée axialement en direction du plateau 21. Il en est de même du flasque 11.

Ces formes tortueuses permettent de réduire l'encombrement du volant amortisseur et d'occuper au mieux l'espace disponible.

On appréciera que la formation du sous-ensemble voile 31 - plateau 21 - dispositif de frottement 9 - permet de rôder aisément ce dispositif de frottement 9 avant montage final sur le véhicule.

Bien entendu la présente invention n'est pas limitée à l'exemple de réalisation décrit. En particulier, le dispositif amortisseur peut être du type de celui décrit dans le document US-A-4,782,933, le voile 31 formant alors une rondelle de guidage d'un amortisseur de torsion monté en série avec un limiteur de couple.

Dans ce cas, ce sont les colonnettes qui assurent la fixation du voile au plateau de pression.

On voit ainsi que, grâce à l'invention, on occupe ainsi l'espace disponible au niveau du nez de centrage 4.

Bien entendu, comme visible à la figure 5, on peut inverser les structures, la collerette 16 du nez 4 étant alors adjacente au flasque 11.

Dans ce cas, il faut prévoir une rondelle 91 pour fixer axialement le plateau 21. Avantageusement il faut traiter cette rondelle comme dans le mode de réalisation des figures 1 à 4, pour que celle-ci soit revêtue d'une couche en carbone diamant amorphe.

On notera que dans cette figure le flasque 11 n'est pas creusé.

Bien entendu en variante de la figure 5, le nez 4 peut être d'un seul tenant avec le flasque 11.

On notera que l'on peut diminuer ou augmenter le nombre de rondelles présentes dans la cavité. Ainsi à la figure 6 le dispositif de frottement ne comporte qu'une rondelle de frottement 42, une rondelle d'application 44 et une rondelle élastique 45.

Ici la rondelle élastique 45 est liée en rotation au plateau de réaction 21, tandis que la rondelle d'application 44 est liée en rotation au nez 4 et la rondelle 41 est fixée par collage soit au voile 31, soit à la rondelle 44.

On notera que la rondelle élastique 45 est comme à la figure 1 une rondelle du type Belleville prolongée à sa périphérie interne par des pattes, qui engrènent avec les rainures associées 46 du plateau de réaction 21.

Bien entendu on peut inverser les structures, en ce qui concerne l'entraînement en rotation des rondelles 44 et 42. Dans ce cas, les rondelles 42,44 portent les mortaises et le nez 4 et le plateau 21 des tenons sous forme respectivement d'échancrures et de dents d'orientation axiale.

Dans tous les cas les rondelles 42,44 engrènent éventuellement à jeu respectivement avec l'ensemble voile 31 - volant 21 et le nez 4.

On peut combiner les dispositions des figures 4 et 6, la demi-bague 60, par exemple en "Arlon", remplaçant par exemple le revêtement au niveau de la collerette 16 et de la partie de plus grand diamètre du nez 4.

## Revendications

1. Volant amortisseur, notamment pour véhicule automobile, du genre comportant globalement deux masses coaxiales (1,2) montées rotatives l'une par rapport à l'autre à l'encontre d'un dispositif amortisseur de torsion (3) comprenant un dispositif de frottement (9), l'une des masses comportant un nez de centrage (4,40) saillant axialement et pénétrant dans un évidement central (5) de l'autre masse, avec intervention de moyens de support (6) entre ledit nez et ledit évidement pour montage rotatif de la masse à évidement central (5), dans lequel le nez central (4) appartient à une première masse (1) desdites masses (1,2) et dans lequel le dispositif amortisseur de torsion (3) comporte un voile (31) fixé sur un plateau de réaction (21) appartenant à la seconde masse (2) desdites masses (1,2), ledit voile (31) et ledit plateau de réaction (21) présentant chacun un alésage central (69,5), caractérisé en ce que le dispositif de frottement (9) est monté dans une cavité (50) délimitée en majeure partie par le plateau de réaction (21) de la seconde masse (2) et le voile (31), et en ce que les moyens de support (6,60) sont du type à palier lisse et interviennent entre le nez central (4) et les alésages centraux (39,5) dudit plateau (21) et dudit voile (31).

2. Volant amortisseur selon la revendication 1, caractérisé en ce que les moyens de support (6) comportent un revêtement de carbone diamant amorphe (6) pour montage rotatif du voile (31) et du plateau (21) de la seconde masse sur le nez central (4) de la première masse (1).

3. Volant amortisseur selon la revendication 1, caractérisé en ce que les moyens de support (6) consistent en un palier lisse en un matériau thermoplastique dur semi-cristallin.

4. Volant amortisseur selon la revendication 3, caractérisé en ce que le palier lisse est un polyetheretherketon, tel que de l'"ARLON".

5. Volant amortisseur selon la revendication 1, caractérisé en ce que les moyens de support (6) consistent en un palier lisse, sous forme d'un polytétrafluoréthylène tel que du "Téflon".

6. Volant amortisseur selon l'une quelconque des revendications 1 à 5 caractérisé en ce que le dispositif de frottement comporte au moins une rondelle (44,42) engrenant, éventuellement à jeu, avec le nez central (4) ou avec le plateau de réaction (21).

7. Volant amortisseur selon la revendication 6, caractérisé en ce que le dispositif de frottement (9) comporte, d'une part, une rondelle d'application (44) dotée à sa périphérie externe de dents (48) pénétrant dans des rainures associées (46) formées à partir d'une creusure pratiquée dans le plateau de réaction (21), et, d'autre part, d'une rondelle de transmission de mouvement (42) dotée à sa périphérie interne de dents (49) pénétrant dans des rainures associées (47) formées à la périphérie externe du nez central (4), et en ce que des rondelles de frottement (41,43) sont disposées de part et d'autre de la rondelle de transmission de mouvement (42), tandis qu'une rondelle élastique à action axiale est interposée entre la rondelle d'application (44) et le fond de la creusure du plateau de réaction (21).

8. Volant amortisseur selon l'une quelconque des revendications 1 à 7 caractérisé en ce que le nez central (4) est de forme tubulaire et présente une collerette (16) ainsi qu'au moins une première portion lisse et une portion dotée de rainures pour engrènement avec une rondelle de transmission de mouvement appartenant au dispositif de frottement (9).

9. Volant amortisseur selon la revendication 8, caractérisé en ce que la périphérie externe du nez central (4) et la face de la collerette (16) sont revêtus d'une couche de carbone diamant amorphe.

## Patentansprüche

1. Dämpfungsschwungrad, insbesondere für Kraftfahrzeuge, das insgesamt zwei koaxiale Massen (1, 2) umfaßt, die im Verhältnis zueinander drehbar entgegen einem Torsionsschwingungsdämpfer (3) gelagert sind, der eine Reibungsvorrichtung (9) enthält, wobei eine der Massen eine Zentriernase (4, 40) umfaßt, die axial vorsteht und in eine mittige Aussparung (5) der anderen Masse eingreift, unter Einfügung von Lagermitteln (6) zwischen der besagten Nase und der besagten Aussparung für die drehbare Anbringung der Masse mit der mittigen Aussparung (5), wobei die mittige Nase (4) zu einer ersten Masse (1) der besagten Massen (1, 2) gehört und wobei der Torsionsschwingungsdämpfer (3) eine Zwischenscheibe (31) umfaßt, die an einer Gegenanpreßplatte (21) befestigt ist, die zu der zweiten Masse (2) der besagten Massen (1, 2) gehört, wobei die besagte Zwischenscheibe (31) und die besagte Gegenanpreßplatte (21) jeweils eine mittige Bohrung (69,5) aufweisen, **dadurch gekennzeichnet,** daß die Reibungsvorrichtung (3) zum größten Teil in einer Aufnahme (50) gelagert ist, die durch die Gegenanpreßplatte (21) der zweiten Masse (2) und die Zwischenscheibe (31) begrenzt wird, und daß die Lagermittel (6, 60) als Gleitlager ausgeführt sind und zwischen der mittigen Nase (4) und den mittigen Bohrungen (39, 5) der besagten Gegenanpreßplatte (21) und der besagten Zwischenscheibe (31) wirksam werden.

2. Dämpfungsschwungrad nach Anspruch 1, **dadurch gekennzeichnet,** daß die Lagermittel (6) eine Beschichtung aus amorphem Diamantkohlenstoff (6) für die drehbare Lagerung der Zwischenscheibe (31) und der Gegenanpreßplatte (21) der zweiten Masse an der mittigen Nase (4) der ersten Masse (1) umfassen.

3. Dämpfungsschwungrad nach Anspruch 1, **dadurch gekennzeichnet**, daß die Lagermittel (6) aus einem Gleitlager aus einem teilkristallinen harten Thermoplast bestehen.

4. Dämpfungsschwungrad nach Anspruch 3, **dadurch gekennzeichnet**, daß das Gleitlager ein Polyetheretherketon, wie etwa "ARLON", ist.

5. Dämpfungsschwungrad nach Anspruch 1, **dadurch gekennzeichnet**, daß die Lagermittel (6) aus einem Gleitlager aus Polytetrafluorethylen, wie etwa "Teflon", bestehen.

6. Dämpfungsschwungrad nach einem der Ansprüche 1 bis 5, **dadurch gekennzeichnet**, daß die Reibungsvorrichtung mindestens eine Scheibe (44, 42) umfaßt, die, gegebenenfalls mit Spiel, mit der mittigen Nase (4) oder mit der Gegenanpreßplatte (21) in Eingriff steht.

7. Dämpfungsschwungrad nach Anspruch 6, **dadurch gekennzeichnet,** daß die Reibungsvorrichtung (9) einerseits eine Anpreßscheibe (44) umfaßt, die an ihrem Außenrand mit Zähnen (48) versehen ist, die in zugehörige Nuten (46) eingreifen, die ausgehend von einer in die Gegenanpreßplatte (21) eingearbeiteten Einsenkung ausgebildet sind, und andererseits eine Bewegungsübertragungsscheibe (42), die an ihrem Innenrand mit Zähnen (49) versehen ist, die in zugehörige Nuten (47) eingreifen, die am Außenrand der mittigen Nase (4) ausgebildet sind, und daß Reibscheiben (41, 43) auf beiden Seiten der Bewegungsübertragungsscheibe (42) angeordnet sind, während eine axial wirksame Federscheibe zwischen der Anpreßscheibe (44) und dem Boden der Einsenkung der Gegenanpreßlatte (21) eingefügt ist.

8. Dämpfungsschwungrad nach einem der Ansprüche 1 bis 7, **dadurch gekennzeichnet,** daß die mittige Nase (4) rohrförmig ausgeführt ist und einen Kragen (16) sowie mindestens ein erstes glattes Teilstück und ein zweites Teilstück aufweist, das mit Nuten versehen ist, um den Eingriff mit einer Bewegungsübertragungsscheibe, die zur Reibungsvorrichtung gehört, herbeizuführen.

9. Dämpfungsschwungrad nach Anspruch 8, **dadurch gekennzeichnet,** daß der Außenrand der mittigen Nase (4) und die Fläche des Kragens (16) mit einer Schicht aus amorphem Diamantkohlenstoff überzogen sind.

## Claims

1. A damped flywheel, especially for a motor vehicle, of the kind consisting generally of two coaxial masses (1, 2) which are mounted for rotation of one with respect to the other against a torsion damper device (3) which includes a friction means (9), with one of the masses including a centring nose (4, 40) projecting axially and penetrating into a central aperture (5) of the other mass, and with support means (6) being interposed between the said nose and the said aperture for the rotary mounting of the mass having the central aperture (5), wherein the central nose (4) is part of a first mass (1) of the said masses (1, 2), and wherein the torsion damper device (3) comprises a damper plate (31) which is fixed on a reaction plate (21) of the second mass (2) of the said masses (1, 2), each of the said damper plate (31) and the said reaction plate (21) having a central bore (69, 5), characterised in that the friction means (9) is mounted in a cavity (50), the greater part of which is bounded by the reaction plate (21) of the second mass (2) and by the damper plate (31), and in that the support means (6, 60) are of the plain bearing type and are interposed between the central nose (4) and the central bores (39, 5) of the said plate (21) and of the said damper plate (31).

2. A damped flywheel according to Claim 1, characterised in that the support means (6) have a coating (6) of amorphous diamond carbon for rotary mounting of the damper plate (31), and of the plate (21) of the second mass, on the central nose (4) of the first mass (1).

3. A damped flywheel according to Claim 1, characterised in that the support means (6) consist of a plain bearing of a hard, semi-crystalline thermoplastic material.

4. A damped flywheel according to Claim 3, characterised in that the plain bearing is a polyetheretherketone, such as "ARLON".

5. A damped flywheel according to Claim 1, characterised in that the support means (6) consist of a plain bearing in the form of a polytetrafluorethylene such as "Teflon".

6. A damped flywheel according to any one of Claims 1 to 5, characterised in that the friction means comprise at least one ring (44, 42) which meshes, optionally with a clearance, with the central nose (4) or with the reaction plate (21).

7. A damped flywheel according to Claim 6, characterised in that the friction means (9) includes, firstly, a thrust ring (44) having, at its outer periphery, teeth (48) which penetrate into associated grooves (46) formed in a recess which is formed in the reaction plate (21), and secondly, a motion transmitting ring (42) having, at its outer periphery, teeth (49) which penetrate into associated grooves (47) formed at the outer periphery of the central nose (4), and in that friction rings (41, 43) are arranged on either side of the motion transmitting ring (42), while an axially acting resilient ring is interposed between the thrust ring (44) and the base of the recess in the reaction plate (21).

8. A damped flywheel according to any one of Claims 1 to 7, characterised in that the central nose (4) is tubular and has a collar portion (16), together with at least one first smooth portion and a portion having grooves for meshing with a motion transmitting ring which is part of the friction means (9).

9. A damped flywheel according to Claim 8, characterised in that the outer periphery of the central nose (4) and the face of the collar portion (16) are coated with a layer of amorphous diamond carbon.
